# EUROPEAN PATENT SPECIFICATION

(11) **EP 3 095 637 B1**
(45) Date of publication and mention of the grant of the patent: **10.03.2021**
(21) Application number: 16170152.9
(22) Date of filing: 18.05.2016
(51) Int. Cl.: B60L 53/14

(54) **CONTROL UNIT FOR ELECTRICALLY DRIVEN VEHICLE**
STEUEREINHEIT FÜR ELEKTRISCH ANGETRIEBENES FAHRZEUG
UNITÉ DE COMMANDE POUR VÉHICULE ÉLECTRIQUE

(30) Priority: 20.05.2015 JP 2015102382; 16.07.2015 JP 2015142127; 05.02.2016 JP 2016020511
(43) Date of publication of application: 23.11.2016
(73) Proprietor: Mitsubishi Jidosha Kogyo Kabushiki Kaisha, Tokyo 108-8410 (JP)
(72) Inventor: HATSUMI, Norihiko, Tokyo, 108-8410 (JP); KAMIMURA, Yasuo, Tokyo, 108-8410 (JP); TANO, Koichi, Tokyo, 108-8410 (JP); FUJIKAWA, Yoshihide, Tokyo, 108-8410 (JP)
(74) Representative: Regimbeau

(56) References cited:
- EP-A1- 1 920 985
- US-A- 5 596 261
- US-A1- 2012 319 648

## Description

### BACKGROUND

The present invention relates to a control unit for an electrically driven vehicle that is supplied with electric power from an exterior power supply.

An electrically driven vehicle such as an electric vehicle or a plug-in hybrid vehicle is configured so that alternating-current electric power supplied from a place outside the vehicle is converted into direct-current electric power by the use of a charging device that is provided in an interior of the vehicle so as to charge a battery installed in the interior of the vehicle. In this electrically driven vehicle, various measures are taken to enable an operator to perform a charging operation appropriately.

For example, Patent Literature 1 below discloses an electric vehicle in which a warning lamp is illuminated and a buzzer is caused to make a buzzing noise when a main key is inserted into a key hole in a key cylinder with a charging lid opened and a shift lever shifted in a parking position P.

Patent Literature 2 below discloses an electrically driven vehicle in which a warning system is activated when a connecting port of a charging connector is opened and a main switch is kept on which enables the vehicle to run using motor power as auxiliary power. US 2012/319648 discloses an electric charging system for an electric vehicle, capable of warning of a weld failure in a relay.
[Patent Literature 1] Japanese Patent No. 3629094
[Patent Literature 2] JP-A-10-155205

### SUMMARY

An object of the invention is to provide a control unit for an electrically driven vehicle which can warn an operator of a state in which the vehicle cannot be charged.

The above object is achieved by a control unit as defined in claim 1. Dependent claims constitute embodiments of the invention. Any other subject-matter outside the scope of protection of the claims is to be regarded as examples not in accordance with the invention.

This application also discloses a control unit for an electrically driven vehicle that can be charged by an exterior power supply being inserted into a charging inlet configured to be closed by an opening and closing device, the control unit comprising:a vehicle state determination means intended to determine whether or not the electrically driven vehicle is in a charging prohibited state;a warning control means intended to control a warning device (31, 32) for issuing a warning to activate the warning device (31, 32) when the electrically driven vehicle satisfies a warning condition, and a connected state determination module intended to determine on a connected state of a charging connection device that is connected with the exterior power supply, a cancelled state determination module intended to determine whether or not the electrically driven vehicle is in a cancelled state in which the charging prohibited state is cancelled ; and a warning stopping module intended to control the warning device to stop issuing the warning when the electrically driven vehicle satisfies a warning stopping condition,wherein the warning condition is a condition in which the vehicle state determination means determines that the electrically driven vehicle is in the charging prohibited state and the opening and closing device (22) is switched to an opened state,wherein the warning stopping condition is a condition that the cancelled state determination module determines that the charging prohibited state is cancelled , and the control unit being characterized in that the charging prohibited state includes a state in which the electrically driven vehicle is in an ignition-on state or a ready-on state, and that the cancelled state includes a state in which the connected state determination module determines that the charging connection device is not connected with the exterior power supply.

### BRIEF DESCRIPTION OF DRAWINGS

Fig. 1 is a block diagram of a control unit for an electrically driven vehicle according to a first embodiment of the invention.
Fig. 2 is a flowchart showing a flow of controlling operations performed by the control unit for an electrically driven vehicle according to the first embodiment of the invention.
Fig. 3 is a flowchart showing a flow of controlling operations performed by a control unit for an electrically driven vehicle according to a second embodiment of the invention.
Fig. 4 is a flowchart showing a flow of controlling operations performed by a control unit for an electrically driven vehicle according to a third embodiment of the invention.
Fig. 5 is a flowchart showing a flow of controlling operations performed by a control unit for an electrically driven vehicle according to a fourth embodiment of the invention.

### DETAILED DESCRIPTION OF EXEMPLIFIED EMBODIMENTS

There is an electrically driven vehicle that includes a control unit that permits the supply of electric power from an exterior power supply when a main switch for controlling a vehicle state is in an off position or an ACC position and a shift lever is shifted in a parking position P. In this vehicle, there is a situation in which an operator cannot be warned of a state in which the vehicle cannot be charged irrespective of the fact that the vehicle is actually in such a state.

To deal with this, the invention has been made with a view to solving the problem described above, and an object of the invention is to provide a control unit for an electrically driven vehicle that can warn an operator of a state in which the vehicle cannot be charged.

Embodiments of a control unit for an electrically driven vehicle according to the invention will be described below by reference to the drawings. However, the invention is not limited to the embodiments that will be described below.

### [First Embodiment]

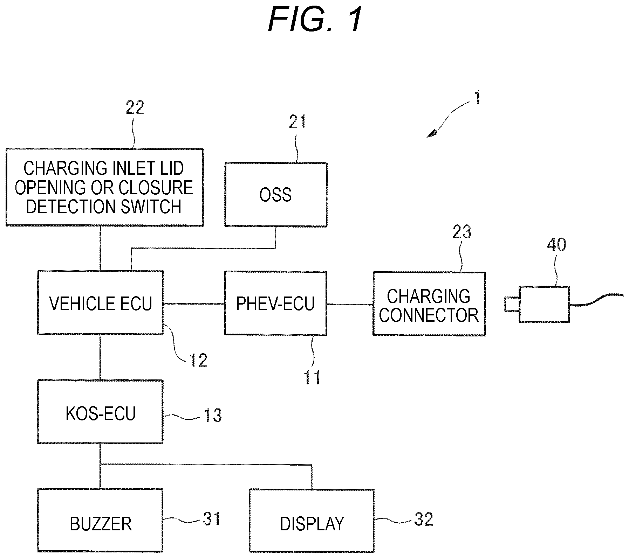

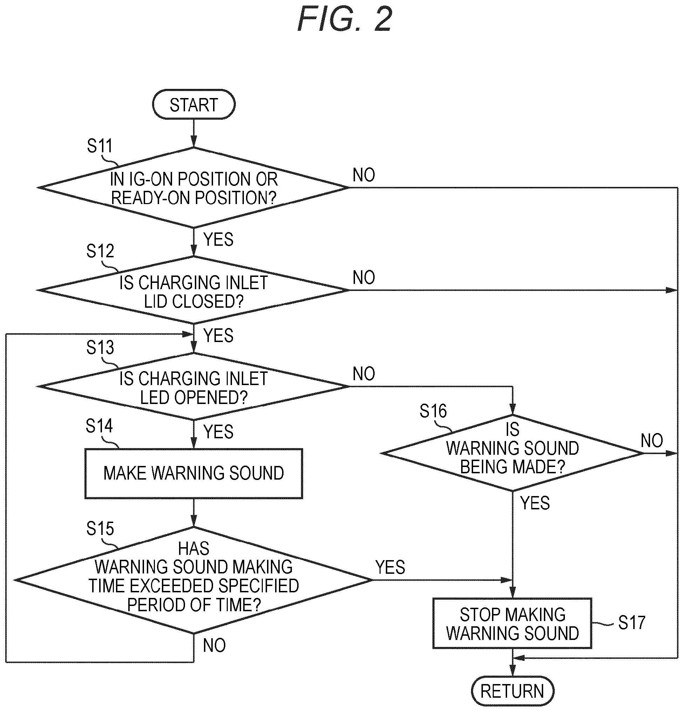

A control unit for an electrically driven vehicle according to a first embodiment of the invention will be described below by the use of Figs. 1 and 2.

In this embodiment, although an electric vehicle and a plug-in hybrid can be used as the electrically driven vehicle, the following description will be made based on the understanding that a plug-in hybrid vehicle is used as the electrically driven vehicle.

A control unit 1 according to this embodiment includes, as shown in Fig. 1, a PHEV (Plug-in Hybrid Electric Vehicle)-ECU (Electronic Control Unit) 11 that is connected with a charging connector 23 by a signal line, a vehicle ECU 12 that is connected with an OSS (One-touch Start System) 21 and a charging inlet lid opening or closure detection switch 22, and a KOS (Keyless Operation System)-ECU 13 that is connected with a buzzer (a warning device) 31 and a display (a warning device) 32.

The PHEV-ECU 11 and the vehicle ECU 12 are connected with each other via a main bus (a signal line). The vehicle ECU 12 and the KOS-ECU 13 are connected with each other via a sub-bus (a signal line). The ECUs 11 to 13 include a counter, a CPU, a memory and the like.

The OSS 21 is a main switch of the electrically driven vehicle and can be switched to four positions: an ACC (accessory position), an IG-ON (ignition-on) position, an IG-OFF (ignition-off) position and a READY-ON (ready-on) position. The OSS 21 transmits signals that signal individually the positions to the PHEV-ECU 11.

When the OSS 21 is in the ACC position, only electric equipment such as an audio system and a car navigation system that are installed on the electrically driven vehicle operates. In this state, equipment that requires the activation of high-voltage power supplies such as a propulsion battery and an auxiliary battery that are installed on the electrically driven vehicle does not operate.

When the OSS 21 is in the IG-ON position, the electric equipment such as the audio system and the car navigation system that are installed on the electrically driven vehicle operates, and an air-conditioner is activated and a blower fan operates. In this state, as when the OSS 21 is in the ACC position, equipment (a compressor, a hot water heater) that requires the activation of the high-voltage power supplies such as the propulsion battery and the auxiliary battery that are installed on the electrically driven vehicle does not operate.

When the OSS 21 is in the READY-ON position, all on-board equipment including a high-voltage system is allowed to operate, and in this state, the vehicle can be driven.

When the OSS 21 is in the IG-OFF position, the vehicle ECU 12 is disconnected from a drive system (or the vehicle ECU 12 is caused to stop functioning in this state), and the electric equipment is also stopped functioning. In this state, the vehicle cannot be driven.

The charging inlet lid opening or closure detection switch 22 is a switch that detects opening or closure of a charging inlet lid that closes a charging inlet to which a charging gun 40 is connected. When the charging inlet lid is opened or closed, the charging inlet lid opening or closure detection switch 22 transmits a lid opening or closure signal to the PHEV-ECU 11 via the vehicle ECU 12. A switch (an operation means) for opening and closing the charging inlet lid can be disposed, for example, outside or inside a passenger compartment of the vehicle.

The charging connector 23 is a terminal to which the charging gun 40 or the like is connected by way of the charging inlet. When the charging gun 40 is connected to the charging connector 23, the charging connector 23 transmits a connection signal to the PHEV-ECU 11.

The buzzer 31 is a buzzing sound making device that makes a first warning sound (a buzzer 1) that is a first warning or a second warning sound (a buzzer 2) that is a second warning that warns more an operator (a driver) than the first warning sound does in response to a signal inputted from the KOS-ECU 13. The first and second warning sounds are stopped when a specified period of time has elapsed. For example, a staccato "pi" sound can be used as the first warning sound, and a slurred "pi" sound can be used as the second warning.

The display 32 is a display device that presents a first warning indication that is a first warning or a second warning indication that is a second warning that visually warns more the operator (the driver) than the first warning indication does in response to a signal inputted from the KOS-ECU 13. It is possible to use a warning light such as a lump or an LED or a liquid crystal panel that displays an icon, a character or a symbol as the display 32. It is possible to use as the second warning indication a lighting method of lighting the warning light or a display method of displaying required information on the liquid crystal panel that differs from those used for the first warning indication. Alternatively, different colors can also be used for the first and second warning indications. For example, In the case of the warning light being used, the warning light is illuminated as the first warning indication, and the warning light can be turned on and off as the second warning indication. It is noted that the first and second warning indications are stopped to be displayed when a specified period of time elapses.

Next, a control flow of controlling the buzzer 31 that is a warning device by the control unit for an electrically driven vehicle that has been described heretofore will be described below by reference to Fig. 2.

Firstly, the PHEV-ECU 11 determines whether or not the OSS 21 is in the IG-ON position or in the READY-ON position (step S11). If neither of the conditions is met (the OSS 21 is in the ACC position or in the IG-OFF position), the control flow returns directly to start by way of return. On the other hand, if either of the conditions is met (the OSS 21 is in the IG-ON position or in the READY-ON position), the control flow proceeds to step S12.

In step S12, the charging inlet lid opening or closure detection switch 22 determines whether or not the charging inlet lid is closed. If the charging inlet lid is opened, the control flow returns directly to start by way of return. On the other hand, if the charging inlet lid is closed, the control flow proceeds to step S13.

Namely, whether or not the electrically driven vehicle is permitted to be charged is determined by going through the steps S11 and S12 (a step of determining whether or not the electrically driven vehicle is prohibited from being charged). If the electrically driven vehicle is permitted to be charged, the control flow returns directly to start by way of return, whereas if the electrically driven vehicle is not permitted to be charged (or in a charging prohibited state), the control flow proceeds to the next step, which is step S13.

In step S13, the charging inlet lid opening or closure detection switch 22 determines whether or not the charging inlet lid is opened.

Next, if it is determined in step S13 that the charging inlet lid is closed, the control flow proceeds to step S16, and it is determined in step S16 whether or not the buzzer 31 is making the first warning sound. On the other hand, if it is determined in step S13 that the charging inlet lid is opened, the control flow proceeds to step S14, where the buzzer 31 is caused to make the first warning sound (step S14). Namely, in step S13, whether or not the charging inlet lid is opened or has been switched to the opened state is determined. The steps S11 to S13 constitute warning sound making conditions.

The buzzer 31 is caused to make the first warning sound in step S14, and thereafter, the control flow proceeds to step S15. Then, in step S15, whether or not the first warning sound making time has exceeded a specified period of time is determined. If it is determined that the first warning sound making time has exceeded the specified period of time (for example, 10 seconds), the control flow proceeds to step S17, and in step S17, the buzzer 31 is caused to stop making the first warning sound. On the other hand, if it is determined that the first warning sound making time has not exceeded the specified period of time, the control flow returns to step S13, where the first warning sound making time by the buzzer 31 is determined. For example, in case the operator becomes aware that the electrically driven vehicle cannot be charged on account of the first warning sound made by the buzzer 31 and then closes the charging inlet lid, the control flow proceeds to step S17 by way of step S16. Then, in this step S17, the buzzer 31 is caused to stop making the first warning sound. On the other hand, in case the charging inlet lid is not closed, the control flow proceeds to step S15 by way of step S14, where the first warning sound making time by the buzzer 31 is determined again.

Consequently, according to this embodiment, the buzzer 31 is caused to perform the first warning sound making operation depending upon whether the charging inlet lid is opened or closed when the electrically driven vehicle is prohibited from being charged, whereby the operator can be warned of the state in which the electrically driven vehicle cannot be charged. This restricts the operator from erroneously performing a charging operation.

### [Second Embodiment]

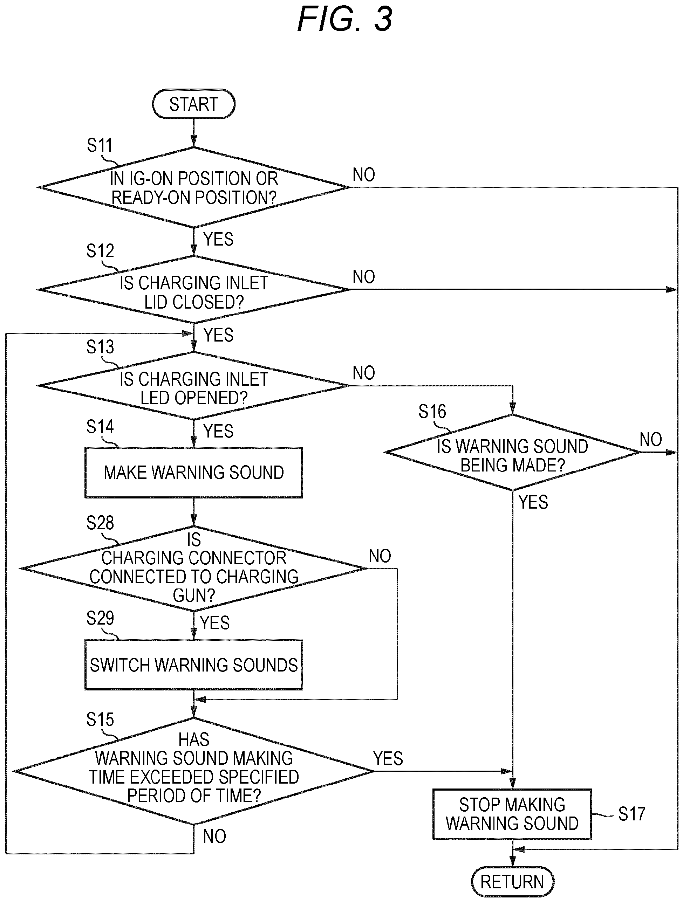

A control unit for an electrically driven vehicle according to a second embodiment of the invention will be described below by the use of Figs. 1 and 3.

This embodiment provides a control flow in which steps S28 and S29 are added to the control flow that is shown in Fig. 2. The other steps of the control flow of this embodiment are generally the same as those of the control flow shown in Fig. 2, and a control unit for an electrically driven vehicle of this embodiment is generally the same as the control unit for an electrically driven vehicle shown in Fig. 1. Like reference numerals will be given to like steps and devices to those of the first embodiment, and the description thereof will be omitted as required.

In the control unit for an electrically driven vehicle according to this embodiment, as shown in Fig. 3, it is determined that the electrically driven vehicle is prohibited from being charged (steps S11, S12). Then, it is determined that a charging inlet lid is opened (step S13), that is, it is determined in step S13 that the charging inlet lid is opened or has been switched to an opened state. Then, a buzzer 31 is caused to make a first warning sound in the next step S14, whereafter it is determined whether or not a charging gun 40 is connected to a charging connector 23 (step S28).

If it is determined in step S28 that the charging gun 40 is not connected to the charging connector 23, the control flow proceeds to step S15, whereas if it is determined in step S28 that the charging gun 40 is connected to the charging connector 23, the control flow proceeds to step S29. In this step S29, the warning sound made by the buzzer 31 is switched from the first warning sound to a second warning sound.

Next, it is determined in step S15 whether or not a warning sound making time by the buzzer 31 has exceeded a specified period of time. If it is determined that the warning sound making time by the buzzer 31 has exceeded the specified period of time (for example, 10 seconds), the control flow proceeds to step S17, and the buzzer 31 is caused to stop making the warning sound in this step S17. On the other hand, if it is determined that the warning sound making time by the buzzer 31 has not exceeded the specified period of time, the control flow returns to step S13, where warning sound making conditions for the buzzer 31 are determined. For example, in case an operator becomes aware that the electrically driven vehicle cannot be charged on account of the warning sound made by the buzzer 31 and then closes a charging inlet lid with the charging gun 40 removed from a charging inlet as required, the control flow proceeds to step S17 by way of step S16, and the buzzer 31 is caused to stop making the warning sound in step S17. On the other hand, if it is determined that the charging inlet lid is not closed, the control flow proceeds to step S15 by way of step S14 and step S28, as well as step S29 as required, where the warning sound making time by the buzzer 31 is determined.

Consequently, according to this embodiment, a similar working effect to that provided by the electrically driven vehicle according to the first embodiment described above is provided. In addition to this, the first warning sound is switched to the second warning sound depending upon whether or not the charging gun 40 is connected to the charging connector 23, whereby the operator who performs a charging operation can be warned of the state in which the electrically driven vehicle is prohibited from being charged in a more ensured fashion.

### [Third Embodiment]

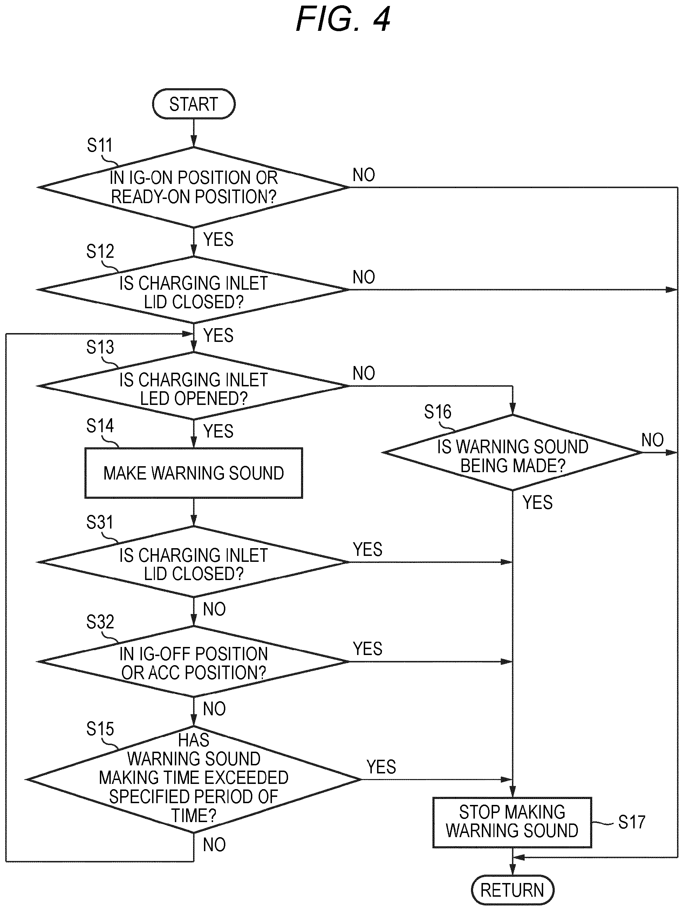

A control unit for an electrically driven vehicle according to a third embodiment of the invention will be described below by the use of Figs. 1 and 4.

This embodiment provides a control flow in which steps S31 and S32 are added to the control flow that is shown in Fig. 2. The other steps of the control flow of this embodiment are generally the same as those of the control flow shown in Fig. 2, and a control unit for an electrically driven vehicle of this embodiment is generally the same as the control unit for an electrically driven vehicle shown in Fig. 1. Like reference numerals will be given to like steps and devices to those of the first embodiment, and the description thereof will be omitted as required.

In the control unit for an electrically driven vehicle according to this embodiment, as shown in Fig. 4, it is determined that the electrically driven vehicle is prohibited from being charged (steps S11, S12). Then, it is determined that a charging inlet lid is opened (step S13), that is, it is determined in step S13 that the charging inlet lid is opened or has been switched to an opened state. Then, a buzzer 31 is caused to make a first warning sound in the next step S14, whereafter it is determined whether or not first warning sound stopping conditions are met (steps S31, S32).

Specifically speaking, in step S31, it is determined by a charging inlet lid opening or closure detection switch 22 whether or not the charging inlet lid is closed. If it is determined that the charging inlet lid is closed, the control flow proceeds to step S17. On the other hand, if it is determined that the charging inlet lid is opened, the control flow proceeds to step S32.

It is determined in step S32 whether an OSS 21 is in an IG-OFF position or in an ACC position. If either of the conditions is met (the OSS 21 is in the IG-OFF position or in the ACC position), the control flow proceeds to step S17. On the other hand, if neither of the conditions is met (the OSS 21 is in an IG-ON position or in a READY-ON position), the control flow proceeds to step S15.

Namely, it is determined in the steps S31, S32 described above whether or not the state is cancelled in which the electrically driven vehicle is prohibited from being charged (a step of determining on a cancellation of the state in which the electrically driven vehicle is prohibited from being charged), and if it is determined that the state is canceled in which the electrically driven vehicle is prohibited from being charged, the control flow proceeds to step S17, and the buzzer 31 is caused to stop making the first warning sound in this step S17.

Next, it is determined in step S15 whether or not a first warning sound making time of the buzzer 31 exceeds a specified period of time. If it is determined that the first warning sound making time of the buzzer 31 has exceeded the specified period of time (for example, 10 seconds), the control flow proceeds to step S17, and the buzzer 31 is caused to stop making the first warning sound in this step S17. On the other hand, if it is determined that the first warning sound making time of the buzzer 31 has not exceeded the specified period of time, the control flow returns to step S13, where the first warning sound making conditions for the buzzer 31 is determined. For example, in case an operator becomes aware that the electrically driven vehicle cannot be charged on account of the first warning sound made by the buzzer 31 and then closes a charging inlet lid with a charging gun 40 removed from a charging inlet as required, the control flow proceeds to step S17 by way of step S16, and the buzzer 31 is caused to stop making the first warning sound in step S17. On the other hand, if it is determined that the charging inlet lid is not closed, the control flow proceeds to steps S31 and S32 by way of step S14, and the warning sound stopping conditions are determined again in steps S31 and S32. Then, if it is determined that neither of the warning sound stopping conditions is met, the first warning sound making time by the buzzer 31 is determined again in step S15.

Consequently, according to this embodiment, a similar working effect to that provided by the electrically driven vehicle according to the first embodiment described above is provided. In addition to this, the first warning sound that is being made is stopped when the warning sound stopping conditions are met even though the specified period of time has not elapsed since the first warning sound was made by the buzzer 31. By adopting this configuration, the operator can recognize the first warning sound as a warning sound that is made in such a state that the electrically driven vehicle cannot be charged and the situation in which the electrically driven vehicle becomes unable to be charged. Thus, the operator can be restricted from erroneously performing the charging operation in a more ensured fashion.

### [Fourth Embodiment]

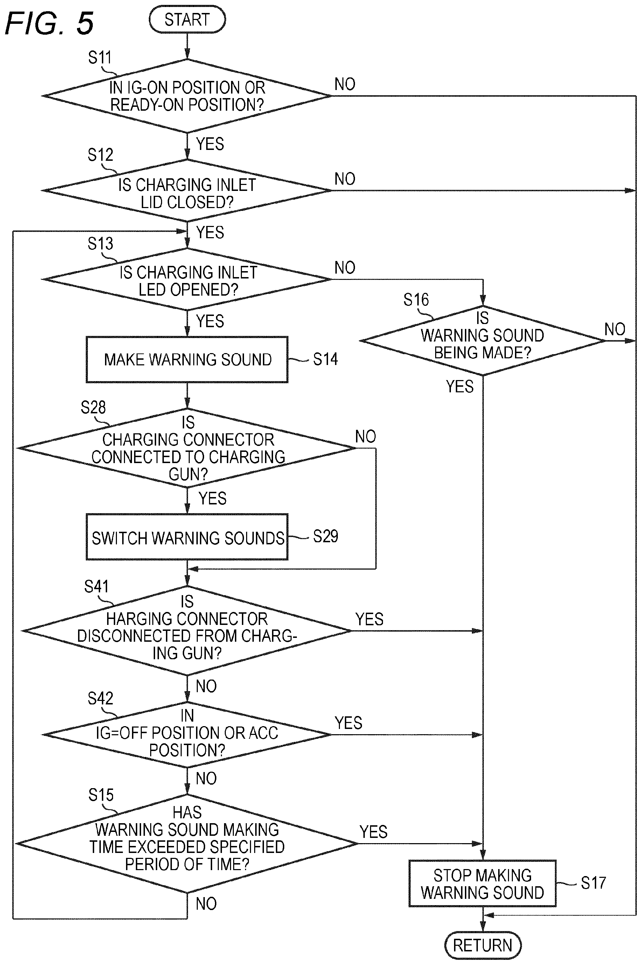

A control unit for an electrically driven vehicle according to a fourth embodiment of the invention will be described below by the use of Figs. 1 and 5.

This embodiment provides a control flow in which steps S41 and S42 are added to the control flow that is shown in Fig. 3. The other steps of the control flow of this embodiment are generally the same as those of the control flow shown in Fig. 3, and a control unit for an electrically driven vehicle of this embodiment is generally the same as the control unit for an electrically driven vehicle shown in Fig. 1. Like reference numerals will be given to like steps and devices to those of the first embodiment, and the description thereof will be omitted as required.

In the control unit for an electrically driven vehicle according to this embodiment, as shown in Fig. 5, it is determined that the electrically driven vehicle is prohibited from being charged (steps S11, S12). Then, it is determined that a charging inlet lid is opened (step S13), that is, it is determined in step S13 that the charging inlet lid is opened or has been switched to an opened state. Then, a buzzer 31 is caused to make a first warning sound in the next step S14. Then, in the next steps S28, S29, the first warning sound is switched to a second warning sound as required, whereafter it is determined whether or not warning sound stopping conditions are met (steps S41, S42).

Specifically speaking, it is determined in step S41 whether or not a charging gun 40 is disconnected from a charging connector 23. If it is determined in this step S41 that the charging gun 40 is not connected to the charging connector 23 (or is disconnected from the charging connector 23), a control flow proceeds to step S17. On the other hand, if it is determined that the charging gun 40 is connected to the charging connector 23 (is not disconnected from the charging connector 23), the control flow proceeds to step S42.

It is determined in step S42 whether an OSS 21 is in an IG-OFF position or in an ACC position. If either of the conditions is met (the OSS 21 is in the IG-OFF position or in the ACC position), the control flow proceeds to step S17. On the other hand, if neither of the conditions is met (the OSS 21 is in an IG-ON position or in a READY-ON position), the control flow proceeds to step S15.

Namely, it is determined in the steps S41, S42 described above whether or not the state is cancelled in which the electrically driven vehicle is prohibited from being charged (a step of determining on a cancellation of the state in which the electrically driven vehicle is prohibited from being charged), and if it is determined that the state is canceled in which the electrically driven vehicle is prohibited from being charged, the control flow proceeds to step S17, and the buzzer 31 is caused to stop making the warning sound in this step S17.

Next, it is determined in step S15 whether or not a warning sound making time of the buzzer 31 exceeds a specified period of time. If it is determined that the warning sound making time of the buzzer 31 has exceeded the specified period of time (for example, 10 seconds), the control flow proceeds to step S17, and the buzzer 31 is caused to stop making the warning sound in this step S17. On the other hand, if it is determined that the warning sound making time of the buzzer 31 has not exceeded the specified period of time, the control flow returns to step S13, where the warning sound making conditions for the buzzer 31 are determined. For example, in case an operator becomes aware that the electrically driven vehicle cannot be charged on account of the warning sound made by the buzzer 31 and then closes a charging inlet lid with a charging gun 40 removed from a charging inlet as required, the control flow proceeds to step S17 by way of step S16, and the buzzer 31 is caused to stop making the warning sound in step S17. On the other hand, if it is determined that the charging inlet lid is not closed, the control flow proceeds to steps S41 and S42 by way of step S14 and step S28, as well as step S29 as required, and the warning sound stopping conditions are determined again in steps S41 and S42. Then, if it is determined that neither of the warning sound stopping conditions is met, the warning sound making time by the buzzer 31 is determined again in step S15.

Consequently, according to this embodiment, a similar working effect to that provided by the electrically driven vehicle according to the second embodiment described above is provided. In addition to this, the warning sound that is being made is stopped when the warning sound stopping conditions are met even though the specified period of time has not elapsed since the warning sound was made by the buzzer 31. By adopting this configuration, the operator can recognize the warning sound as a warning sound that is made in such a state that the electrically driven vehicle cannot be charged and the situation in which the electrically driven vehicle becomes unable to be charged. Thus, the operator can be restricted from erroneously performing the charging operation in a more ensured fashion.

In the event that a switch that opens and closes the charging inlet lid is placed on an outside of a passenger compartment of the electrically driven vehicle, it is preferable that the buzzer 31 and the display 32 are provided on the outside of the passenger compartment of the electrically driven vehicle. Additionally, it is preferable that the display 32 is provided near the switch. On the other hand, in the event that the charging inlet led opening and closing switch is placed inside the passenger compartment, it is preferable that the buzzer 31 and the display 32 are provided inside the passenger compartment. Additionally, it is preferable that the display 32 is provided on an instrument panel inside the passenger compartment. This is because the operator who operates the charging inlet lid opening and closing switch can be warned in a more appropriate and ensured fashion by means of the warning sound made by the buzzer 31 and/or the warning indication by the display.

It is possible to combine the control unit for an electrically driven vehicle according to the third embodiment and the control unit for an electrically driven vehicle according to the fourth embodiment to provide another control unit for an electrically driven vehicle.

In the control units for an electrically driven vehicle according to the first and fourth embodiments, the display 32 can be used in place of the buzzer 31, whereby the warning sound making conditions are substituted with warning indication displaying conditions, and making the warning sound is substituted with displaying the warning indication. Further, the first warning sound can be substituted with a first warning indication, and the second warning sound can be substituted with a second warning indication that differs from the first warning indication. In the case of the display 32 being used, it goes without saying that the first warning indication and the second warning indication can be realized by using lamps or LEDs of different colors, warning screens of different colors, statements stating different contents, a lamp or an LED that is turned on and off at different timings or a combination thereof.

In addition, in the control units for an electrically driven vehicle according to the first and fourth embodiments, both the buzzer 31 and the display 32 can be used together, whereby the warning sound making conditions are also treated as the warning indication displaying conditions, and both making the warning sound and displaying the warning indication are performed. Further, in relation to the first and second warning sounds (warning indications), making the warning sounds and displaying the warning indications can be combined together.

Additionally, in the control units for an electrically driven vehicle according to the first and fourth embodiments, only either of the buzzer 31 and the display 32 can be used, whereby a warning action is performed which suits the warning device used.

According to the control unit for an electrically driven vehicle according to the invention, the warning action is performed by the warning device according to whether the opening and closing device is opened or closed when the electrically driven vehicle is prohibited from being charged. Thus, the operator can be warned that the electrically driven vehicle in such a state that it cannot be charged.

## Claims

1. A control unit (1) for an electrically driven vehicle adapted to be charged by an exterior power supply (40) being inserted into a charging inlet configured to be closed by an opening and closing device (22), the control unit comprising:
a vehicle state determination means adapted to determine whether or not the electrically driven vehicle is in a charging prohibited state;
a warning control means adapted to a warning device (31, 32) for issuing a warning to activate the warning device (31, 32) when the electrically driven vehicle satisfies a warning condition, and
a connected state determination module adapted to determine on a connected state of a charging connection device (23) that is connected with the exterior power supply (40),
a canceled state determination module adapted to determine whether or not the electrically driven vehicle is in a cancelled state in which the charging prohibited state is canceled; and
a warning stopping module adapted to control the warning device (31, 32) to stop issuing the warning when the electrically driven vehicle satisfies a warning stopping condition,
wherein the warning condition is a condition in which the vehicle state determination means determines that the electrically driven vehicle is in the charging prohibited state and the opening and closing device (22) is switched to an opened state,
wherein the warning stopping condition is a condition that the canceled state determination module determines that the charging prohibited state is canceled, and
the control unit (1) being **characterized in that**
the charging prohibited state includes a state in which the electrically driven vehicle is in an ignition-on state or a ready-on state, and
that the canceled state includes a state in which the connected state determination module determines that the charging connection device (23) is not connected with the exterior power supply (40).

2. The control unit (1) according to Claim 1, wherein
the warning device (31) is adapted to make a warning sound when the electrically driven vehicle satisfies the warning condition.

3. The control unit (1) according to Claim 1, wherein
the warning device (32) is adapted to display a warning when the electrically driven vehicle satisfies the warning condition.

4. The control unit (1) according to Claim 1, wherein
the warning device (31, 32) is adapted to make a warning sound and display a warning, when the electrically driven vehicle satisfies the warning condition.

5. The control unit (1) according to any one of Claims 1 to 4,
wherein the warning control module is adapted to control the warning device (31, 32) to issue a first warning, when the vehicle state determination module determines that the electrically driven vehicle is in the charging prohibited state and the opening and closing device is switched to the opened state, and
the warning control module is adapted to control the warning device (31, 32) to switch the warning to a second warning that differs from the first warning, when the connected state determination module determines that the charging connection device (23) is in connection with the exterior power supply (40).

6. The control unit (1) according to Claim 1, wherein
the canceled state includes a state in which the opening and closing device (22) closes the charging inlet.

7. The control unit (1) according to Claim 1, wherein
the canceled state includes a state in which the electrically driven vehicle is in an ignition-off state or an accessory position or a state in which a specified length of time elapses since the warning is issued.

8. The control unit (1) according to any one of Claims 1 to 7, further comprising:
an operation means that is provided outside the electrically driven vehicle to operate the opening and closing device (22),
wherein the warning device (31, 32) is provided outside the electrically driven vehicle.

## Patentansprüche

1. Steuereinheit (1) für ein elektrisch angetriebenes Fahrzeug, das angepasst ist, von einer externen Stromversorgung (40) geladen zu werden, die in einen Ladeeinlass eingesteckt wird, der dazu ausgelegt ist, von einer Öffnungs- und Schließvorrichtung (22) geschlossen zu werden, wobei die Steuereinheit Folgendes umfasst:
ein Fahrzeugzustandsbestimmungsmittel, das angepasst ist zu bestimmen, ob sich das elektrisch angetriebene Fahrzeug in einem Ladeuntersagungszustand befindet oder nicht;
ein Warnungssteuermittel, das angepasst ist, eine Warnvorrichtung (31, 32) zum Ausgeben einer Warnung zu steuern, um die Warnvorrichtung (31, 32) zu aktivieren, wenn das elektrisch angetriebene Fahrzeug eine Warnbedingung erfüllt, und
ein Verbindungszustandsbestimmungsmodul, das angepasst ist, auf einen Verbindungszustand einer Ladeverbindungsvorrichtung (23), die mit der externen Stromversorgung (40) verbunden ist, zu bestimmen,
ein Abbruchzustandsbestimmungsmodul, das angepasst ist zu bestimmen, ob sich das elektrisch angetriebene Fahrzeug in einem abgebrochenen Zustand befindet, in dem der Ladeuntersagungszustand abgebrochen ist; und
ein Warnungsbeendigungsmodul, das angepasst ist, die Warnvorrichtung (31, 32) zu steuern, um das Ausgeben der Warnung zu beenden, wenn das elektrisch angetriebene Fahrzeug eine Warnungsbeendigungsbedingung erfüllt,
wobei die Warnbedingung eine Bedingung ist, bei der das Fahrzeugzustandsbestimmungsmittel bestimmt, dass sich das elektrisch angetriebene Fahrzeug im Ladeuntersagungszustand befindet, und die Öffnungs- und Schließvorrichtung (22) in einen geöffneten Zustand geschaltet wird,
wobei die Warnungsbeendigungsbedingung eine Bedingung ist, bei der das Abbruchzustandsbestimmungsmodul bestimmt, dass der Ladeuntersagungszustand abgebrochen ist, und
wobei die Steuereinheit (1) **dadurch gekennzeichnet ist, dass**
der Ladeuntersagungszustand einen Zustand beinhaltet, in dem sich das elektrisch angetriebene Fahrzeug in einem Zündung-ein-Zustand oder einem Bereitein-Zustand befindet, und
dass der abgebrochene Zustand einen Zustand beinhaltet, in dem das Verbindungszustandsbestimmungsmodul bestimmt, dass die Ladeverbindungsvorrichtung (23) nicht mit der externen Stromversorgung (40) verbunden ist.

2. Steuereinheit (1) nach Anspruch 1, wobei
die Warnvorrichtung (31) angepasst ist, einen Warnton abzugeben, wenn das elektrisch angetriebene Fahrzeug die Warnbedingung erfüllt.

3. Steuereinheit (1) nach Anspruch 1, wobei
die Warnvorrichtung (32) angepasst ist, eine Warnung anzuzeigen, wenn das elektrisch angetriebene Fahrzeug die Warnbedingung erfüllt.

4. Steuereinheit (1) nach Anspruch 1, wobei
die Warnvorrichtung (31, 32) angepasst ist, einen Warnton abzugeben und eine Warnung anzuzeigen, wenn das elektrisch angetriebene Fahrzeug die Warnbedingung erfüllt.

5. Steuereinheit (1) nach einem der Ansprüche 1 bis 4, wobei
das Warnungssteuermodul angepasst ist, die Warnvorrichtung (31, 32) zu steuern, eine erste Warnung auszugeben, wenn das Fahrzeugzustandsbestimmungsmodul bestimmt, dass sich das elektrisch angetriebene Fahrzeug im Ladeuntersagungszustand befindet, und die Öffnungs- und Schließvorrichtung in den geöffneten Zustand geschaltet wird, und
das Warnungssteuermodul angepasst ist, die Warnvorrichtung (31, 32) zu steuern, die Warnung auf eine zweite Warnung zu schalten, die sich von der ersten Warnung unterscheidet, wenn das Verbindungszustandsbestimmungsmodul bestimmt, dass die Ladeverbindungsvorrichtung (23) mit der externen Stromversorgung (40) verbunden ist.

6. Steuereinheit (1) nach Anspruch 1, wobei
der abgebrochene Zustand einen Zustand beinhaltet, in dem die Öffnungs- und Schließvorrichtung (22) den Ladeeinlass schließt.

7. Steuereinheit (1) nach Anspruch 1, wobei
der abgebrochene Zustand einen Zustand beinhaltet, in dem sich das elektrisch angetriebene Fahrzeug in einem Zündung-aus-Zustand oder einer Zubehörposition oder einem Zustand, in dem eine spezifizierte Zeitlänge seit Ausgeben der Warnung vergangen ist, befindet.

8. Steuereinheit (1) nach einem der Ansprüche 1 bis 7, die ferner Folgendes umfasst:
ein Betriebsmittel, das außerhalb des elektrisch angetriebenen Fahrzeug bereitgestellt ist, zum Betreiben einer Öffnungs- und Schließvorrichtung (22),
wobei die Warnvorrichtung (31, 32) außerhalb des elektrisch angetriebenen Fahrzeugs bereitgestellt ist.

## Revendications

1. Unité de commande (1) pour un véhicule à propulsion électrique adapté pour être chargé par une alimentation électrique extérieure (40) étant insérée dans une entrée de charge configurée pour être fermée par un dispositif d'ouverture et de fermeture (22), l'unité de commande comprenant :
un moyen de détermination d'état de véhicule, adapté pour déterminer si le véhicule à propulsion électrique est ou non dans un état de charge interdit ;
un moyen de commande d'avertissement, adapté pour commander un dispositif d'avertissement (31, 32) pour émettre un avertissement, afin d'activer le dispositif d'avertissement (31, 32) lorsque le véhicule à propulsion électrique satisfait à une condition d'avertissement, et
un module de détermination d'état connecté, adapté pour déterminer un état connecté d'un dispositif de connexion de charge (23) qui est connecté à l'alimentation électrique extérieure (40),
un module de détermination d'état annulé, adapté pour déterminer si le véhicule à propulsion électrique est ou non dans un état annulé dans lequel l'état de charge interdit est annulé ; et
un module d'arrêt d'avertissement, adapté pour commander le dispositif d'avertissement (31, 32) afin qu'il cesse d'émettre l'avertissement lorsque le véhicule à propulsion électrique satisfait à une condition d'arrêt d'avertissement,
dans laquelle la condition d'avertissement est une condition dans laquelle le moyen de détermination d'état de véhicule détermine que le véhicule à propulsion électrique est dans l'état de charge interdit, et le dispositif d'ouverture et de fermeture (22) passe à un état ouvert,
dans laquelle la condition d'arrêt d'avertissement est une condition où le module de détermination d'état annulé détermine que l'état de charge interdit est annulé, et
l'unité de commande (1) étant **caractérisée en ce que**
l'état de charge interdit comporte un état dans lequel le véhicule à propulsion électrique est dans un état d'allumage ou un état prêt à l'emploi, et
**en ce que** l'état annulé comporte un état dans lequel le module de détermination d'état connecté détermine que le dispositif de connexion de charge (23) n'est pas connecté à l'alimentation électrique extérieure (40).

2. Unité de commande (1) selon la revendication 1, dans laquelle
le dispositif d'avertissement (31) est adapté pour émettre un son d'avertissement lorsque le véhicule à propulsion électrique satisfait à la condition d'avertissement.

3. Unité de commande (1) selon la revendication 1, dans laquelle
le dispositif d'avertissement (32) est adapté pour afficher un avertissement lorsque le véhicule à propulsion électrique satisfait à la condition d'avertissement.

4. Unité de commande (1) selon la revendication 1, dans laquelle
le dispositif d'avertissement (31, 32) est adapté pour émettre un son d'avertissement et afficher un avertissement, lorsque le véhicule à propulsion électrique satisfait à la condition d'avertissement.

5. Unité de commande (1) selon l'une quelconque des revendications 1 à 4,
dans laquelle le module de commande d'avertissement est adapté pour commander le dispositif d'avertissement (31, 32) afin qu'il émette un premier avertissement, lorsque le module de détermination d'état de véhicule détermine que le véhicule à propulsion électrique est dans l'état de charge interdit, et le dispositif d'ouverture et de fermeture passe à l'état ouvert, et
le module de commande d'avertissement est adapté pour commander le dispositif d'avertissement (31, 32) afin de faire passer l'avertissement à un second avertissement différent du premier avertissement, lorsque le module de détermination d'état connecté détermine que le dispositif de connexion de charge (23) est en connexion avec l'alimentation électrique extérieure (40).

6. Unité de commande (1) selon la revendication 1, dans laquelle
l'état annulé comporte un état dans lequel le dispositif d'ouverture et de fermeture (22) ferme l'entrée de charge.

7. Unité de commande (1) selon la revendication 1, dans laquelle
l'état annulé comporte un état dans lequel le véhicule à propulsion électrique est dans un état d'extinction ou une position accessoire ou un état dans lequel une durée déterminée s'écoule depuis que l'avertissement est émis.

8. Unité de commande (1) selon l'une quelconque des revendications 1 à 7, comprenant en outre :
un moyen d'actionnement qui est prévu à l'extérieur du véhicule à propulsion électrique pour actionner le dispositif d'ouverture et de fermeture (22),
dans laquelle le dispositif d'avertissement (31, 32) est prévu à l'extérieur du véhicule à propulsion électrique.
